# EUROPÄISCHE PATENTANMELDUNG

(11) **EP 1 447 266 A2**
(43) Veröffentlichungstag der Anmeldung: **18.08.2004**
(21) Anmeldenummer: 04003131.2
(22) Anmeldetag: 12.02.2004
(51) Int. Cl.: B60N 3/08

(54) **Saugvorrichtung**

(30) Priorität: 12.02.2003 DE 20302282 U
(71) Anmelder: Hoh, Alexander, 97906 Faulbach (DE)
(72) Erfinder: Hoh, Alexander, 97906 Faulbach (DE)
(74) Vertreter: Thürer, Andreas

(57) **Zusammenfassung**

Um eine Saugvorrichtung (1), die in einem Fahrzeug eingebaut ist, so auszubilden, dass sie einfach zu bedienen ist und zudem hohe Sicherheitsanforderungen erfüllt, wird vorgeschlagen, dass sie mit einer Saugöffnung (2) ausgestattet ist, die unmittelbar im Hantierbereich eines Fahrers und/oder Mitfahrers im Fahrzeuginnenraum leicht zugänglich angeordnet ist und über eine feuer- und/oder glutfeste, nicht brennbare Saugleitung (3), die in der Saugöffnung (2) mündet, über eine Absaugpumpe (11) mit einem feuer- und/oder glutfesten, nicht brennbaren Auffangbehälter (4) für abgesaugtes Material verbunden ist.

## Beschreibung

Die Erfindung betrifft eine Saugvorrichtung, die in einem Fahrzeug eingebaut ist.

Die DE 299 21 025 U1 offenbart eine Saugvorrichtung zum Einsatz in mobiler Umgebung, wobei das Saugteil mit einer Saugöffnung fest eingebaut ist.

Als nachteilig erweist es sich, dass bei der offenbarten Verwendung von üblichen Staubsaugerbeuteln nicht alle Stoffe, die sich im Innenraum des Fahrzeugs befinden, abgesaugt werden können, insbesondere wenn es sich um beispielsweise leicht brennbare oder brennende Partikel handelt.

Die Aufgabe der vorliegenden Erfindung ist es, eine Saugvorrichtung zu liefern, die einfach zu bedienen ist und zudem hohe Sicherheitsanforderungen erfüllt.

Die Aufgabe wird erfindungsgemäß dadurch gelöst, dass die Saugvorrichtung, die in einem Fahrzeug eingebaut ist, mit einer Saugöffnung, die unmittelbar im Hantierbereich eines Fahrers und/oder Mitfahrers im Fahrzeuginnenraum leicht zugänglich angeordnet ist und über eine feuer- und/oder glutfeste, nicht brennbare Saugleitung, die in der Saugöffnung mündet, über eine Absaugpumpe mit einem feuer- und/oder glutfesten, nicht brennbaren Auffangbehälter für abgesaugtes Material verbunden ist.

Durch die vorgeschlagene Vorrichtung ist es möglich, im Fahrzeuginnenraum, insbesondere in einem Kraftfahrzeuginnenraum, entstehende, auch feuergefährliche Luftverunreinigungen sowie Schwebteilchen und Partikel, insbesondere Zigarettenasche oder Zigarettenreste, ohne Gefährdung oder Geruchsbelästigung abzusaugen. Die abgesaugten Teilchen gelangen durch die feuerfeste Saugleitung in den ebenfalls feuerfesten Auffangbehälter, der bei Bedarf entleert werden kann, beispielsweise bei Erreichen einer vorbestimmten Füllhöhe. Das Volumen des Auffangbehälters kann nach Bedarf oder räumlichen Gegebenheiten der Umgebung, in dem der Auffangbehälter angeordnet ist, eingestellt werden. Je nach Art und Stärke der Belastung durch feuergefährliche Teilchen und/oder Rauch kann einer bedarfsabhängige Feuerhemmung, beispielsweise durch ein feuererstickend getränktes austauschbares Filtertuch, oder auch durch einen Vorrat an Wasser, durch das der Rauch und die Schwebteilchen geleitet werden, eingestellt werden. Eine andere Möglichkeit besteht in der Verwendung eines den Boden des Auffangbehälters bedeckenden Auffangtuchs, das wiederum feuerhemmend ausgestattet ist. Bei einem ausreichenden Volumen des Auffangbehälters und einer angepassten Einstellung der Saugkraft können zusätzlich auch feuerungefährliche Teilchen oder Staub aus dem Kraftfahrzeug abgesaugt werden. Die Bedienung der Saugvorrichtung umfasst vorzugsweise Ein- und Ausschalter sowie eine einstellbare Saugstärkenregelung, die bevorzugt in der Nähe der Saugöffnung angeordnet sind.

Eine sehr gut vom Fahrer und Beifahrer erreichbare Vorrichtung liegt vor, wenn die Saugöffnung im Vorderraum des Fahrzeugs angebracht ist. Gerade für den Fahrer ist es beim Bedienen der Saugvorrichtung insbesondere während der Fahrt sehr vorteilhaft, wenn diese neben oder zwischen den übrigen Bedienelementen des Fahrzeugs angebracht ist. Bei Limousinen ist die Anbringung im Fondbereich vorteilhaft.

Besonders leicht zu handhaben ist die Saugvorrichtung, wenn die Saugöffnung in der Mittelkonsole angebracht ist. In der Mittelkonsole kann sowohl der Fahrer als auch der Beifahrer die Saugöffnung bequem erreichen. Zudem ist die Verlegung der Saugleitung unter der Mittelkonsole vorteilhaft möglich, da dort ausreichend Platz ist und zudem ein Zugang zum Motorraum gegeben ist, in dem vorzugsweise der Auffangbehälter anzuordnen ist.

Ein Doppelnutzen ist gegeben, wenn die Saugöffnung an einem im Fahrzeug vorgesehenen Aschenbecher angebracht ist. Hierdurch wird zum einen die eingebrachte Asche aufgefangen und kann nicht auf den Fahrzeugboden fallen. Zugleich wird ein stark raucherzeugendes Nachglimmen der Asche- und Zigarettenreste vermieden, weil diese durch die Saugöffnung direkt abgesaugt werden.

Vorzugsweise ist der Auffangbehälter im Motorraum untergebracht, da er dort in einer nahezu beliebigen Form und, angepasst an die räumlichen Gegebenheiten, auch mit einem großen Volumen untergebracht werden kann. Zudem ist mit der Fahrzeugbatterie ein Betrieb der Saugpumpe möglich, die auf diese Weise direkt an dem Auffangbehälter angeordnet werden kann.

Eine sichere Verhinderung einer Gefährdung durch glühende Aschereste wird erreicht, wenn der Auffangbehälter eine feuerlöschende Flüssigkeit enthält. Die Flüssigkeit ist beispielsweise Wasser kann aber auch eine andere Substanz sein, je nach Bedarf und Stärke der Belastung durch feuererzeugende Glut oder Asche.

Eine zusätzliche Sicherheit gegen ein unkontrolliertes Weiterglimmen der Asche ist gegeben, wenn im Auffangbehälter eine Vorrichtung vorgesehen ist, mittels der in vorbestimmten Zeitintervallen, auf Anforderung und/oder jeweils beim Ausschalten der Anlage ein feuerlöschender Wasserguss auszulösen ist.

Vorteilhaft ist es, wenn der Auffangbehälter eine vorzugsweise austauschbare Innenschicht aus einer hitzebeständigen und/oder feuerlöschenden Substanz enthält. Auf diese Weise ist einerseits eine allseitige feuerverhindernde Wirkung erreicht, zudem kann mit dem Austauschen der Innenschicht zugleich das aufgesaugte Material entfernt werden, ohne dass es noch einmal in einen anderen Behälter gefüllt werden müsste. Vorzugsweise handelt es sich bei der Innenschicht um einen Auffangbeutel, der der Innenform des Auffangbehälters entspricht.

Ein vergrößerter Aktionsbereich für die Saugvorrichtung ergibt sich, wenn an die Saugöffnung ein in den Fahrzeuginnenraum reichender ansteckbarer Erweiterungsschlauch einsetzbar ist. Auf diese Weise können beispielsweise am Boden des Fahrzeugs befindliche Staubpartikel aufgesaugt werden oder eine Aschenbecherfunktion für Personen auf den Rücksitzen geliefert werden, ohne dass eine zusätzliche Saugvorrichtung in dem hinteren Bereich des Fahrzeugs eingerichtet werden müsste.

Eine sehr schnell einrichtbare Verschiebung der Saugöffnung ist möglich, wenn die Saugleitung in den Innenraum des Fahrzeugs verlängerbar ausziehbar ist.

Vorteilhaft ist es, wenn die Saugstärke im Hantierbereich des Fahrers und/oder Mitfahrers mittels eines Bedienelements einzustellen ist. Auf diese Weise kann eine bedarfsgerechte Einstellung der Saugstärke stattfinden, wobei die Bedienung vorteilhaft ist mittels eines Dreh-, Schiebe- oder Wippschalters stattfindet, mit dem zugleich ein vollständiges Ausstellen der Saugleistung möglich ist.

Um beispielsweise eine Rückströmung des aufgesaugten Rauches bei schnellem Ausstellen der Saugfunktion zu verhindern, wird vorgeschlagen, dass die Saugöffnung mittels einer Abdeckvorrichtung abzudecken ist. Auf diese Weise wird zudem eine Geruchsbelästigung sicher verhindert.

Um eine kontinuierliche Verhinderung einer Rückströmung und/oder auch eine Sichtblende zu erreichen, wird vorgeschlagen, dass die Abdeckvorrichtung selbstverschließend ist. Die Abdeckvorrichtung kann beispielsweise als Klappe ausgebildet sein, in die sich nach oben öffnet, wobei auf diese Weise zugleich durch die Klappe die Asche in die Saugöffnung geleitet wird und nicht neben die Saugöffnung fallen kann. Vorteilhaft ist diese Klappe gegen ein Austreten von Geräuschen aus dem Motorraum, die eventuell durch den Absaugschlauch entstehen können, mittels einer Dichtung geschützt.

Weitere Merkmale und Vorteile der Erfindung ergeben sich aus den Ansprüchen und der nachstehenden Beschreibung, in der Ausführungsbeispiele des Gegenstands der Erfindung in Verbindung mit der Zeichnung näher erläutert sind. Es zeigen:
- Fig. 1: eine Saugvorrichtung im schematischen Aufbau,
- Fig.1a: einen Auffangbehälter,
- Fig. 1b: einen Auffangbehälter mit Wassertank,
- Fig.2: einen ansteckbaren Schlauch,
- Fig.3: einen ausziehbaren Schlauch und
- Fig.4: eine eingesetzte Saugvorrichtung.

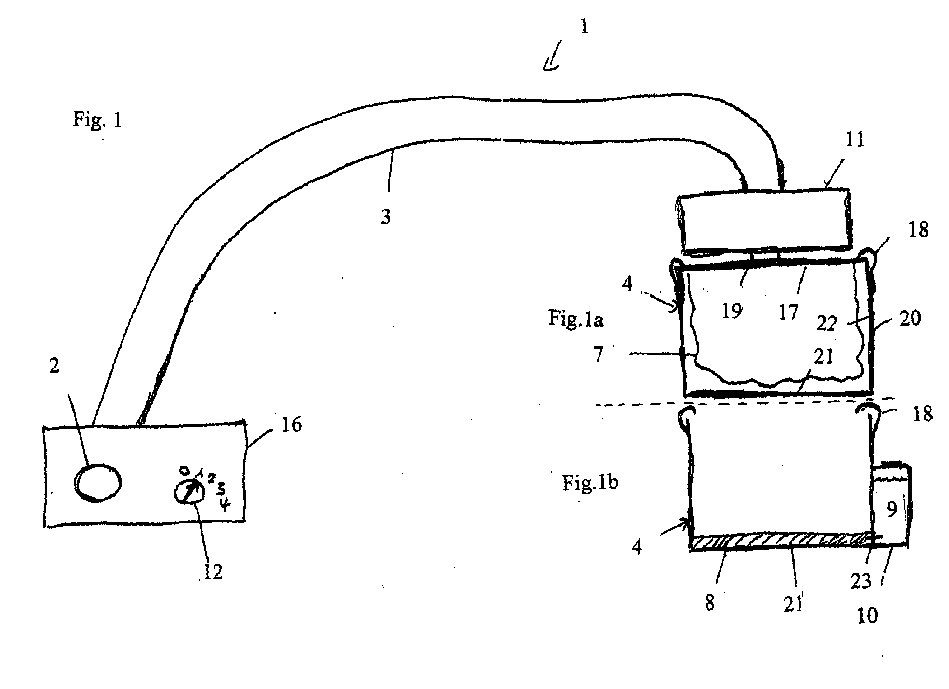

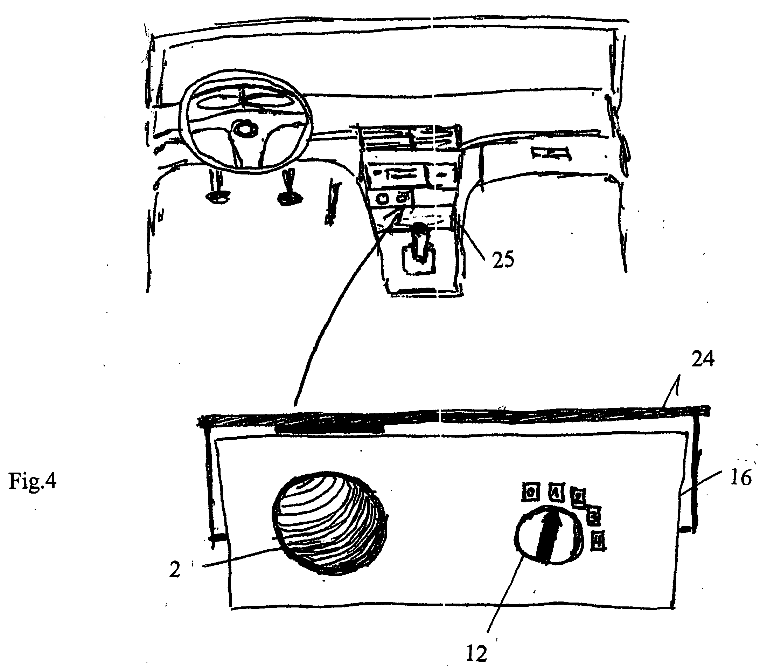

Fig.1 zeigt eine Saugvorrichtung 1, die eine Frontplatte 16 aufweist, in der eine Saugöffnung 2 mündet. Die Frontplatte 16 wird, wie in Fig. 4 dargestellt, im Vorderraum eines Fahrzeugs vorzugsweise an der Mittelkonsole untergebracht. Das Fahrzeug kann ein Kraftfahrzeug, insbesondere ein Personenkraftwagen aber auch ein Lastkraftwagen oder ein anderes Gütertransportfahrzeug sein. In direkter Nähe zur Saugöffnung 2 ist ein Drehschalter 12 angebracht, der fünf Einstellstufen aufweist, beginnend mit der Saugstärke 0, entsprechend keine Saugleistung, bis zur Saugstärke 4 = maximale Saugleistung. Auf diese Weise kann der Fahrer mit derselben Hand, mit der er beispielsweise Aschereste in die Saugöffnung zwei gleiten lässt auch den Drehschalter 12 bedienen, was einen optimalen Komfort gewährleistet. Von der Saugöffnung 2 fühlt eine Saugleitung 3 mit einer an die Fahrzeuggegebenheiten angepassten Länge zu einer Saugpumpe 11. Die Saugpumpe 11 wird beispielsweise bei einem Fahrzeug, bei dem der Motor aktuell nicht läuft, von der Fahrzeugbatterie betrieben, während die Saugpumpe 11 während der Fahrt insbesondere von der abgegebenen Leistung der Lichtmaschine mitversorgt wird. Von der Saugpumpe 11 aus wird das aufgesaugte Material, die aufgesaugten Gase oder Rauch in einen Auffangbehälter 4 geleitet.

Fig. 1a zeigt einen Auffangbehälter 4 mit einem Auffangbeutel 7 insbesondere aus feuerbeständigem Filtermaterial. Dieses Filtermaterial ist so beschaffen, es auch glühende Zigaretten oder glühende Aschereste ohne Gefahr für die Umwelt und insbesondere für die Fahrzeuginsassen oder auch nachfolgende Fahrzeuge auffängt und insbesondere die Glut abtötet. Unterstützend kann der Auffangbehälter 4 insbesondere aus einem metallischen Material hergestellt sein beispielsweise aus Aluminium oder einem dünnen Stahlblech. Die Form des Auffangbehälters 4 kann an die Gegebenheiten im Motorraum des Fahrzeugs, indem der Auffangbehälter 4 insbesondere angeordnet werden kann, angepasst werden. Im vorliegenden Beispiel weist der Auffangbehälter 4 einen zylinderförmigen Körper 20 auf, der mit Zylinderwänden 22 und einer Bodenplatte 21 ausgestattet ist. Geschlossen ist der Auffangbehälter 4 beispielsweise, wie dargestellt, mittels eines Deckels 17, der durch umlegbare Haken 18 am Körper 20 zu befestigen ist und eine Durchführung 19 für die abgesaugten Partikel und den Rauch, die von der Saugpumpe 11 zugeführt werden, aufweist. Die Durchführung bzw. die Ankopplung des Schlauches kann auch an einer Seite des Auffangbehälters 4 angebracht sein. Auf diese Weise ist der Deckel leichter zu öffnen und der Auffangbeutel 7 kann einfacher entleert werden. Der Auffangbeutel 7 ist beispielsweise durch Öffnen des Deckels 17 freizulegen, aus dem Auffangbehälter 4 entnehmbar und durch einen neuen Auffangbeutel 4 auszutauschen. Der Auffangbeutel 7 kleidet den Innenraum des vorzugsweise zylinderförmigen Körpers 20 sowohl am Boden 21 als auch an den Wänden 22 aus.

Fig. 1b zeigt einen anderen Auffangbehälter 4, wobei jedoch in die feuer- und glutlöschende Funktion in diesem Fall durch eine mit Wasser 9 befeuchtete Schwammschicht 8 am Boden 21 des Auffangbehälters 4 ausgeübt wird. Die ständige Versorgung der Schwammschicht 8 ist durch einen Wassertank 10 gewährleistet, der einen dem Auffangbehälter 4 angekoppelt ist und eine Verbindung 23 zur Schwammschicht 8 aufweist. Der Verschluss des Auffangbehälters 4 kann wiederum durch Haken 18, die einen Deckel 17 halten, erfolgen, wie in Fig. 1a beschrieben. Eine weitere Verbesserung der Sicherheit kann durch eine kleine Sprinklervorrichtung im Auffangbehälter vorgenommen werden, die beispielsweise in Zeitintervallen, auf Anfrage oder jeweils bei Ausschalten des Saugvorgangs kurzzeitig betätigt wird.

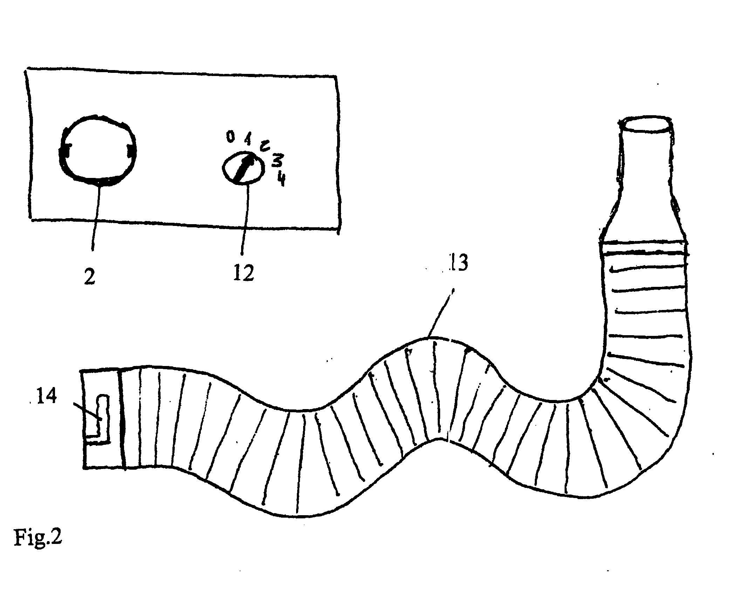

Fig. 2 zeigt eine Saugöffnung 2 sowie einen daran ansteckbaren Schlauch 13, die beispielsweise mittels eines Bajonettverschlusses 14 sicher aneinander gekoppelt werden können. Auf diese Weise können auch im Bodenbereich des Fahrzeugs befindliche Partikel aufgesaugt werden, wobei der Schlauch 13 nicht ständig an der Saugöffnung 2 befestigt sein muss, sondern bei Bedarf eingesetzt werden kann. Zudem ist auf diese Weise eine variable Aschenbecherfunktion beispielsweise für Mitfahrer oft den Rücksitz in möglich.

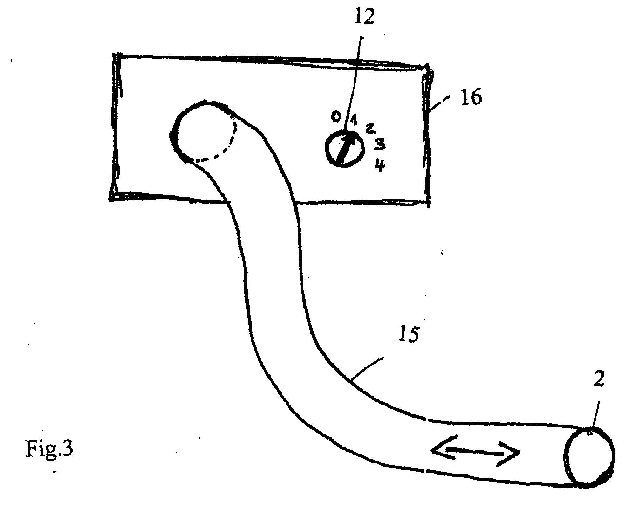

Fig. 3 zeigt eine Saugvorrichtung 1, in die einen ausziehbaren Schlauch 15 aufweist, an dessen Ende sich die Saugöffnung 2 befindet. Der Schlauch 15 ist, wenn er nicht mehr benötigt wird, in der Frontplatte 16 einschiebbar und in einem sich dahinter befindlichen Raum versenkbar.

Fig. 4 zeigt das Einsetzen einer Frontplatte 16 in eine dafür vorgesehene Öffnung 24, die sich in einer Mittelkonsole 25 eines Fahrzeugs befindet. Neben der Saugöffnung 2 ist ein Drehschalter 12, oder auch ein Schiebe-, Kipp- oder Wippschalter angebracht, der sich im Hantierbereich des Fahrers des Fahrzeugs befindet und somit auch während der Fahrt leicht zu bedienen ist. Neben der Saugöffnung 2 ist vorteilhaft auch ein Betätigungsschalter zum Starten der Vorrichtung für den Wasserguss vorgesehen. Vorteilhaft kann die Saugöffnung 2 mit einem nicht dargestellten Leuchtring umgeben sein, so dass auch bei Dunkelheit ein leichtes Auffinden der Saugöffnung 2 möglich ist. Der Leuchtring ist vorteilhaft beispielsweise in Rot ausgebildet, um sich von den umgebenden Einrichtungen in der Konsole abzuheben.

### BEZUGSZEICHENLISTE

- 1: Saugvorrichtung
- 2: Saugöffnung
- 3: Saugleitung
- 4: Auffangbehälter
- 5: Erweiterungsschlauch
- 6: Bedienelement
- 7: Auffangbeutel
- 8: Schwammschicht
- 9: Wasser
- 10: Wassertank
- 11: Absaugpumpe
- 12: Drehschalter
- 13: ansteckbarer Schlauch
- 14: Bajonettverschluss
- 15: ausziehbarer Schlauch
- 16: Frontplatte
- 17: Deckel
- 18: Haken
- 19: Durchführung
- 20: Körper
- 21: Boden
- 22: Wand
- 23: Verbindung
- 24: Öffnung
- 25: Mittelkonsole

## Patentansprüche

1. Saugvorrichtung (1), die in einem Fahrzeug eingebaut ist, mit einer Saugöffnung (2), die unmittelbar im Hantierbereich eines Fahrers und/oder Mitfahrers im Fahrzeuginnenraum leicht zugänglich angeordnet ist und über eine feuer- und/oder glutfeste, nicht brennbare Saugleitung (3), die in der Saugöffnung (2) mündet, über eine Absaugpumpe (11) mit einem feuer- und/oder glutfesten, nicht brennbaren Auffangbehälter (4) für abgesaugtes Material verbunden ist.

2. Vorrichtung nach Anspruch 1, **dadurch gekennzeichnet, dass** die Saugöffnung (2) im Vorderraum des Fahrzeugs angebracht ist.

3. Vorrichtung nach Anspruch 1 oder 2, **dadurch gekennzeichnet, dass** die Saugöffnung (2) in der Mittelkonsole angebracht ist.

4. Vorrichtung nach einem der Ansprüche 1 bis 3, **dadurch gekennzeichnet, dass** die Saugöffnung (2) an einem im Fahrzeug vorgesehenen Aschenbecher angebracht ist.

5. Vorrichtung nach einem der Ansprüche 1 bis 4, **dadurch gekennzeichnet, dass** der Auffangbehälter (4) im Motorraum untergebracht ist.

6. Vorrichtung nach einem der Ansprüche 1 bis 5, **dadurch gekennzeichnet, dass** der Auffangbehälter (4) eine feuerlöschende Flüssigkeit enthält.

7. Vorrichtung nach einem der Ansprüche 1 bis 6, **dadurch gekennzeichnet, dass** der Auffangbehälter (4) eine vorzugsweise austauschbare Innenschicht aus einer hitzebeständigen und/oder feuerlöschenden Substanz enthält.

8. Vorrichtung nach einem der Ansprüche 1 bis 7, **dadurch gekennzeichnet, dass** im Auffangbehälter (4) eine Vorrichtung vorgesehen ist, mittels der in vorbestimmten Zeitintervallen, auf Anforderung und/oder jeweils beim Ausschalten der Anlage ein feuerlöschender Wasserguss auszulösen ist.

9. Vorrichtung nach einem der Ansprüche 1 bis 8, **dadurch gekennzeichnet, dass** an die Saugöffnung (2) ein in den Fahrzeuginnenraum reichender ansteckbarer Erweiterungsschlauch (5) einsetzbar ist.

10. Vorrichtung nach einem der Ansprüche 1 bis 9, **dadurch gekennzeichnet, dass** die Saugleitung (3) in den Innenraum des Fahrzeugs verlängerbar ausziehbar ist.

11. Vorrichtung nach einem der Ansprüche 1 bis 10, **dadurch gekennzeichnet, dass** die Saugstärke im Hantierbereich des Fahrers und/oder Mitfahrers mittels eines Bedienelements (6) einzustellen ist.

12. Vorrichtung nach einem der Ansprüche 1 bis 11, **dadurch gekennzeichnet, dass** die Saugöffnung (2) mittels einer Abdeckvorrichtung (7) abzudecken ist.

13. Vorrichtung nach Anspruch 12, **dadurch gekennzeichnet, dass** die Abdeckvorrichtung (7) selbstverschließend ist.
